(19) Europäisches Patentamt
European Patent Office
Office européen des brevets

(11) **EP 1 845 702 A1**

(12) **DEMANDE DE BREVET EUROPEEN**

(43) Date de publication:
**17.10.2007 Bulletin 2007/42**

(51) Int Cl.:
*H04N 1/44* (2006.01)          *H04L 9/00* (2006.01)

(21) Numéro de dépôt: **07106049.5**

(22) Date de dépôt: **12.04.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **14.04.2006 FR 0603360**

(71) Demandeur: **France Telecom**
**75015 Paris (FR)**

(72) Inventeurs:
• **Francfort, Stanislas**
**92130 ISSY LES MOULINEAUX (FR)**
• **Frisch, Laurent**
**75013 PARIS (FR)**
• **Gilbert, Henri**
**91440 BURES-sur-YVETTE (FR)**

(74) Mandataire: **de la Bigne, Guillaume Michel Marie et al**
**Lhermet La Bigne & Rémy**
**11, boulevard de Sébastopol**
**75001 Paris (FR)**

(54) **Procédé de diffusion et de marquage d'un contenu numérique, procédé de dechiffrement, dispositif de dechiffrement et programme d'ordinateur et support de donnés pour le dechiffrement d'un contenu numérique chiffres**

(57) Ce procédé comporte une étape (130) de chiffrement d'un contenu numérique initial (10), paramétrée par une clé de chiffrement, une étape (140) de transmission du contenu numérique chiffré (14, 14A, 14B) vers un terminal récepteur, et une étape (150) de déchiffrement du contenu numérique chiffré (14, 14A, 14B), paramétrée par une clé de déchiffrement. L'étape de déchiffrement est adaptée pour que le contenu numérique déchiffré (16) soit similaire au contenu numérique initial (10) à des erreurs de marquage près dépendant de la clé de déchiffrement. Le contenu numérique (10) comporte au moins un premier sous-ensemble d'éléments dont une éventuelle variation modifierait perceptiblement ce contenu numérique (10), et un deuxième sous-ensemble d'éléments dont une éventuelle variation modifierait imperceptiblement ce contenu numérique (10). L'algorithme de déchiffrement est adapté pour que la probabilité pour que le premier sous-ensemble du contenu numérique déchiffré comporte des erreurs de marquage est inférieure ou égale à une première valeur prédéterminée relativement basse, et pour que le second sous-ensemble du contenu numérique déchiffré comporte des erreurs de marquage.

Fig. 1

## Description

La présente invention concerne un procédé de diffusion et de marquage d'un contenu numérique, un procédé de déchiffrement, un dispositif de déchiffrement et un programme d'ordinateur pour le déchiffrement d'un contenu numérique chiffré, et un support de données pour un tel programme d'ordinateur.

La diffusion d'un contenu numérique, tel qu'un fichier texte, une image, une vidéo, un fichier musical, ou autre, est généralement effectuée à travers un réseau (satellite, radio, câble, multicast-IP...), ou par distribution de supports matériels de stockage (CD-ROMs...), vers au moins un terminal récepteur.

Pour des raisons de confidentialité, il est connu de protéger le contenu numérique diffusé en le chiffrant avant sa diffusion. Chaque terminal récepteur autorisé est alors muni de moyens de déchiffrement permettant de reconstituer le contenu numérique.

Un terminal interceptant un contenu numérique qui ne lui est pas destiné n'est généralement pas muni de tels moyens de déchiffrement, et ne pourrait donc pas reconstituer le contenu numérique.

Afin de protéger un contenu numérique contre la copie illégale, il est connu d'intégrer une marque à ce contenu numérique, c'est à dire un ensemble de bits inséré de manière imperceptible dans une partie du contenu numérique et susceptible d'être extrait par des moyens d'extraction de marques aptes à interpréter cette marque.

Une telle marque contient généralement un identifiant du propriétaire et/ou, dans le cas de la diffusion du contenu numérique, un identifiant du destinataire de ce contenu numérique.

En cas de copie illégale d'un contenu numérique, la marque, intégrée au contenu, est également copiée avec lui. Ainsi, si une copie illégale est examinée, il est possible, en extrayant sa marque, de retrouver l'identifiant du destinataire ayant reçu le contenu numérique d'origine, ce destinataire étant alors considéré comme étant à l'origine de la copie illégale.

Un procédé habituel d'insertion de marques dans un contenu numérique diffusé à une pluralité de récepteurs consiste à générer autant de contenus numériques marqués qu'il y a de récepteurs, et à transmettre séparément chaque contenu numérique marqué.

Un tel procédé présente l'inconvénient de ne plus permettre la diffusion simultanée d'un même contenu numérique à plusieurs personnes, par exemple en cas de diffusion par satellite, par radio ou par multicast-IP.

Ainsi, on a proposé dans l'état de la technique, notamment d'après FR-A-2 853 099, un procédé de diffusion d'un contenu numérique vers au moins un terminal récepteur, du type comportant :

- une étape de chiffrement d'un contenu numérique initial, par l'application d'un algorithme de chiffrement paramétré par une clé de chiffrement,
- une étape de transmission du contenu numérique chiffré vers le terminal récepteur,
- une étape de déchiffrement du contenu numérique chiffré, par l'application d'un algorithme de déchiffrement paramétré par une clé de déchiffrement, destiné à générer un contenu numérique déchiffré,

l'algorithme de déchiffrement étant adapté pour que le contenu numérique déchiffré soit similaire au contenu numérique initial à des erreurs de marquage près dépendant de la clé de déchiffrement.

Dans ce qui suit, on appellera erreurs de marquage des erreurs générées volontairement lors du déchiffrement, ces erreurs formant une marque dans le contenu numérique.

Grâce au procédé, le déchiffrement et le marquage sont liés et ne peuvent pas être réalisés indépendamment l'un de l'autre. Chaque contenu numérique diffusé est donc inévitablement marqué.

Les erreurs de marquage générées au cours du déchiffrement forment des marques associées à la clé de déchiffrement. Ainsi, chaque terminal récepteur obtient un contenu numérique déchiffré comportant une marque dépendant de sa clé de déchiffrement.

De préférence, chaque terminal récepteur comporte une clé de déchiffrement qui lui est propre, mais il est possible qu'une clé de déchiffrement soit commune à un groupe de terminaux récepteurs.

Grâce au procédé défini précédemment, un même contenu numérique peut être diffusé simultanément vers une pluralité de terminaux récepteurs et être marqué différemment pour chaque terminal récepteur ou groupe de terminaux récepteurs.

Toutefois, puisque le déchiffrement est réalisé en générant des erreurs de marquage, il existe un risque de détériorer ce contenu numérique.

L'invention ne présente pas cet inconvénient, en proposant un procédé permettant de diffuser simultanément un contenu numérique vers une pluralité de terminaux récepteurs et de marquer chaque contenu numérique reçu en limitant sa détérioration.

En effet, l'invention a pour objet un procédé de diffusion d'un contenu numérique vers au moins un terminal récepteur, comportant :

- une étape de chiffrement d'un contenu numérique initial, par l'application d'un algorithme de chiffrement paramétré par une clé de chiffrement,
- une étape de transmission du contenu numérique chiffré vers le terminal récepteur,
- une étape de déchiffrement du contenu numérique chiffré, par l'application d'un algorithme de déchiffrement paramétré par une clé de déchiffrement, destiné à générer un contenu numérique déchiffré,

l'algorithme de déchiffrement étant adapté pour que le contenu numérique déchiffré soit similaire au contenu numérique initial à des erreurs de marquage près dépendant de la clé de déchiffrement, **caractérisé en ce que**, le contenu numérique comportant au moins un premier sous-ensemble d'éléments dont une éventuelle variation modifierait perceptiblement ce contenu numérique, et un deuxième sous-ensemble d'éléments dont une éventuelle variation modifierait imperceptiblement ce contenu numérique, l'algorithme de déchiffrement est adapté pour que :

- la probabilité pour que le premier sous-ensemble du contenu numérique déchiffré comporte des erreurs de marquage est inférieure ou égale à une première valeur prédéterminée, cette première valeur prédéterminée étant suffisamment basse pour que la qualité du contenu numérique déchiffré soit sensiblement identique à la qualité du contenu numérique initial,
- le second sous-ensemble du contenu numérique déchiffré comporte des erreurs de marquage.

Ainsi, en distinguant les éléments dont une éventuelle variation modifierait perceptiblement ce contenu numérique des éléments dont une éventuelle variation modifierait imperceptiblement ce contenu numérique, et en adaptant l'algorithme de déchiffrement pour qu'il ne génère au pire qu'un nombre très limité d'erreurs sur les éléments du premier sous-ensemble, on s'assure que la détérioration du contenu numérique due au marquage est limitée.

Un procédé de diffusion selon l'invention peut en outre comporter l'une ou plusieurs des caractéristiques suivantes.

- Le procédé de diffusion comporte une étape préliminaire de génération de clés de déchiffrement spécifiques, au cours de laquelle chaque clé de déchiffrement spécifique est générée en modifiant une clé de déchiffrement générique, cette clé de déchiffrement générique étant une clé de déchiffrement permettant de paramétrer un algorithme de déchiffrement apte à déchiffrer le contenu numérique chiffré sans générer d'erreurs de marquage. Ainsi, chaque clé de déchiffrement spécifique diffère peu de la clé de déchiffrement générique, et permet donc de paramétrer un algorithme de déchiffrement apte à déchiffrer le contenu numérique chiffré, tout en générant des erreurs de marquage.
- L'algorithme de déchiffrement est adapté pour que la probabilité pour que le deuxième sous-ensemble du contenu numérique déchiffré comporte des erreurs de marquage est inférieure ou égale à une seconde valeur prédéterminée, supérieure à la première valeur prédéterminée, cette seconde valeur prédéterminée étant suffisamment basse pour que la qualité du contenu numérique déchiffré soit sensiblement identique à la qualité du contenu numérique initial. Ainsi, il est possible de limiter les erreurs de marquage générées dans le deuxième sous-ensemble, afin que ce deuxième sous-ensemble ne comporte pas plus d'erreurs que nécessaire pour le marquage.

- Le procédé de diffusion comporte, avant l'étape de chiffrement, une étape de codage du contenu numérique initial en un ensemble d'éléments de format adapté à une transmission vers le terminal récepteur. Cette étape de codage est réalisée en appliquant, au contenu numérique initial, une transformée telle qu'une transformée de Fourier discrète, une transformée en cosinus discrète, une transformée de Fourier-Mellin discrète, ou une transformée en ondelettes. Le codage à l'aide d'une transformée facilite le chiffrement et la transmission du contenu numérique.
- Le procédé de diffusion comporte, avant l'étape de chiffrement, une étape de séparation de l'ensemble d'éléments en au moins une première et une deuxième parties d'éléments distinctes, contenant respectivement les premier et deuxième sous-ensembles d'éléments, les algorithmes de chiffrement et de déchiffrement étant adaptés pour que la deuxième partie soit chiffrée et déchiffrée séparément et indépendamment de la première partie. La séparation de l'ensemble d'éléments en première et deuxième partie facilite le traitement séparé des éléments de ces parties.
- La première valeur prédéterminée est nulle. Ainsi, on s'assure que le fichier numérique ne sera pas détérioré de manière visible. La première valeur prédéterminée est nulle notamment lorsque les étapes de chiffrement et de déchiffrement sont réalisée en laissant inchangés les éléments de la première partie.
- Les algorithmes de chiffrement et de déchiffrement sont adaptés pour laisser la première partie inchangée, l'algorithme de chiffrement comporte l'application d'une première fonction de permutation aux éléments de la deuxième partie uniquement, cette première fonction de permutation étant paramétrée par la clé de chiffrement, et l'algorithme de déchiffrement comporte l'application d'une seconde fonction de permutation aux éléments chiffrés de la deuxième partie uniquement, cette seconde fonction de permutation étant paramétrée par la clé de déchiffrement spécifique associée au terminal récepteur, les première et seconde fonctions de permutation étant sensiblement inverses l'une de l'autre, à quelques différences près dépendant de la clé de déchiffrement, de sorte que la seconde fonction permutation génère, parmi les éléments de la deuxième partie, des erreurs de marquage.
- Les algorithmes de chiffrement et de déchiffrement sont adaptés pour laisser la première partie inchangée, l'algorithme de chiffrement comporte une première opération « ou exclusif » des éléments de la deuxième partie uniquement avec une chaîne d'éléments paramétrée par la clé de chiffrement, l'algorithme de déchiffrement comporte une seconde opération « ou exclusif » des éléments chiffrés de la deuxième partie avec une chaîne d'éléments paramétrée par la clé de déchiffrement spécifique associée au terminal récepteur, la seconde opération « ou exclusif » étant adaptée pour reconstituer les éléments de la deuxième partie en générant, parmi ces éléments de la deuxième partie, des erreurs de marquage.

- L'algorithme de chiffrement comporte une première opération « ou exclusif » de l'ensemble d'éléments avec une chaîne d'éléments paramétrée par la clé de chiffrement, l'algorithme de déchiffrement comporte une seconde opération « ou exclusif » de l'ensemble des éléments chiffrés avec une chaîne d'éléments paramétrée par la clé de déchiffrement spécifique associée au terminal récepteur, la seconde opération « ou exclusif » étant adaptée pour reconstituer l'ensemble d'éléments en générant des erreurs de marquage.

L'invention concerne également un procédé de déchiffrement d'un contenu numérique ayant été chiffré par l'application d'un algorithme de chiffrement à un contenu numérique initial, le procédé de déchiffrement comportant l'application d'un algorithme de déchiffrement paramétré par une clé de déchiffrement spécifique, destiné à générer un contenu numérique déchiffré, l'algorithme de déchiffrement étant adapté pour que le contenu numérique déchiffré soit similaire au contenu numérique initial à des erreurs de marquage près dépendant de la clé de déchiffrement spécifique, **caractérisé en ce que**, le contenu numérique comportant au moins un premier sous-ensemble d'éléments dont une éventuelle variation modifierait perceptiblement ce contenu numérique, et un deuxième sous-ensemble d'éléments dont une éventuelle variation modifierait imperceptiblement ce contenu numérique, l'algorithme de déchiffrement est adapté pour que :

- la probabilité pour que le premier sous-ensemble du contenu numérique déchiffré comporte des erreurs de marquage est inférieure ou égale à une première valeur prédéterminée, cette première valeur prédéterminée étant suffisamment basse pour que la qualité du contenu numérique déchiffré soit sensiblement identique à la qualité du contenu numérique initial,
- le second sous-ensemble du contenu numérique déchiffré comporte des erreurs de marquage.

L'invention concerne en outre un dispositif de déchiffrement d'un contenu numérique ayant été chiffré par l'application d'un algorithme de chiffrement à un contenu numérique initial, **caractérisé en ce qu'**il comporte :

- des moyens de stockage d'un algorithme de déchiffrement paramétré par une clé de déchiffrement spécifique, adapté pour générer un contenu numérique déchiffré de façon que le contenu numérique déchiffré soit similaire au contenu numérique initial à des erreurs de marquage près dépendant de la clé de déchiffrement spécifique, l'algorithme de déchiffrement étant adapté pour que, le contenu numérique comportant au moins un premier sous-ensemble d'éléments dont une éventuelle variation modifierait perceptiblement ce contenu numérique, et un deuxième sous-ensemble d'éléments dont une éventuelle variation modifierait imperceptiblement ce contenu numérique :

  • la probabilité pour que le premier sous-ensemble du contenu numérique déchiffré comporte des erreurs de marquage est inférieure ou égale à une première valeur prédéterminée, cette première valeur prédéterminée étant suffisamment basse pour que la qualité du contenu numérique déchiffré soit sensiblement identique à la qualité du contenu numérique initial,
  • le second sous-ensemble du contenu numérique déchiffré comporte des erreurs de marquage.

- des moyens d'application de l'algorithme de déchiffrement au contenu numérique chiffré.

L'invention concerne également un programme d'ordinateur pour le déchiffrement d'un contenu numérique ayant été chiffré par l'application d'un algorithme de chiffrement à un contenu numérique initial, le programme comportant des instructions logicielles pour l'application d'un algorithme de déchiffrement paramétré par une clé de déchiffrement spécifique, destiné à générer un contenu numérique déchiffré, l'algorithme de déchiffrement étant adapté pour que le contenu numérique déchiffré soit similaire au contenu numérique initial à des erreurs de marquage près dépendant de la clé de déchiffrement spécifique, **caractérisé en ce que**, le contenu numérique comportant au moins un premier sous-ensemble d'éléments dont une éventuelle variation modifierait perceptiblement ce contenu numérique, et un deuxième sous-ensemble d'éléments dont une éventuelle variation modifierait imperceptiblement ce contenu numérique, l'algorithme de déchiffrement est adapté pour que :

- la probabilité pour que le premier sous-ensemble du contenu numérique déchiffré comporte des erreurs de marquage est inférieure ou égale à une première valeur prédéterminée, cette première valeur prédéterminée étant suffisamment basse pour que la qualité du contenu numérique déchiffré soit sensiblement identique à la qualité du contenu numérique initial,
- le second sous-ensemble du contenu numérique déchiffré comporte des erreurs de marquage.

L'invention concerne enfin un support de données lisible par un ordinateur, caractérisé en ce qu'il comporte des moyens de stockage pour un programme d'ordinateur tel que défini précédemment.

L'invention sera mieux comprise à la lecture de la description qui va suivre, donnée uniquement à titre d'exemple et faite en se référant aux dessins annexés dans lesquels :

- la figure 1 représente un procédé de diffusion selon un premier ou deuxième mode de réalisation de l'invention ;
- la figure 2 représente un procédé de diffusion selon un troisième mode de réalisation de l'invention.

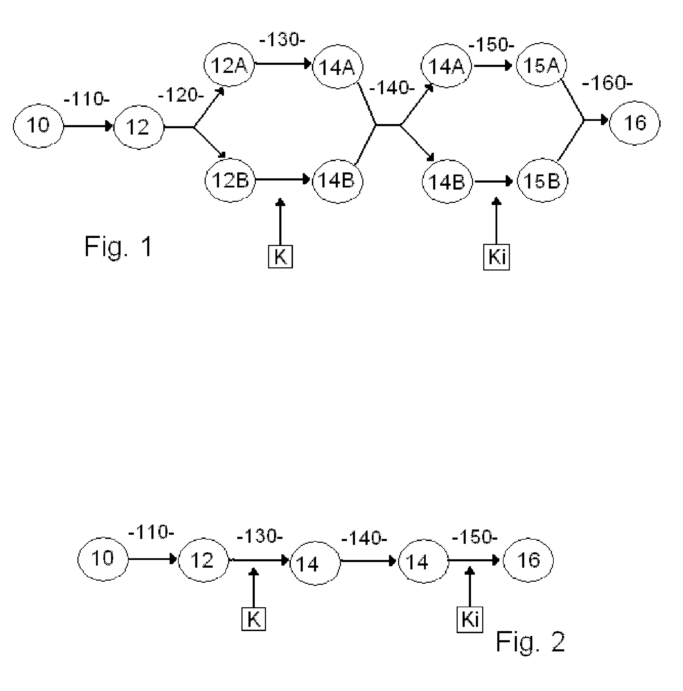

On a représenté sur la figure 1 un procédé de diffusion d'un contenu numérique 10 d'un terminal émetteur vers au moins un terminal récepteur, généralement une pluralité de terminaux récepteurs, selon un premier mode de réalisation de l'invention.

Un tel procédé est destiné à la diffusion simultanée d'un même contenu numérique 10 vers plusieurs terminaux récepteurs, par exemple dans le cas de la diffusion d'un programme télévisé, ou de n'importe quel contenu numérique, tel qu'un fichier texte, une image, un fichier vidéo, un fichier musical, etc. Une telle diffusion de contenu numérique est par exemple réalisée à l'aide de moyens de transmission par satellite, par radio, par réseau (multicast-IP), par distribution de CD-ROMs, etc.

Pour des raisons de confidentialité, le contenu numérique 10 est habituellement chiffré, avant d'être transmis, à l'aide d'une clé de chiffrement K connue uniquement par le terminal émetteur, puis déchiffré par chaque terminal récepteur à l'aide d'une clé de déchiffrement Ki spécifique à ce terminal afin de reconstituer un contenu numérique similaire au contenu numérique initial 10.

On prévoit une étape préliminaire 100 de génération de clés de déchiffrement spécifiques Ki, au cours de laquelle, pour chaque terminal récepteur, une clé de déchiffrement spécifique Ki est générée et transmise à ce terminal récepteur.

Chaque clé de déchiffrement spécifique Ki est générée en modifiant une clé dite clé de déchiffrement générique. Cette clé de déchiffrement générique est la clé unique permettant de déchiffrer sans erreurs le contenu numérique chiffré à l'aide de la clé de chiffrement K. Habituellement, les clé de chiffrement K et de déchiffrement générique sont identiques.

Les modifications apportées à la clé de déchiffrement générique pour générer une clé de déchiffrement spécifique Ki sont propres à cette clé de déchiffrement spécifique Ki, de sorte que chaque clé de déchiffrement spécifique Ki permet de déchiffrer le contenu numérique chiffré avec des erreurs propres à cette clé de déchiffrement spécifique.

De préférence, chaque terminal récepteur est associé à une clé de déchiffrement qui lui est propre, mais, en variante, une même clé de déchiffrement peut être transmise à un groupe de terminaux récepteurs.

Lorsqu'un contenu numérique initial 10 doit être diffusé, on réalise une étape 110 de codage de ce contenu numérique initial 10 par l'application d'une transformée classique telle qu'une transformée de Fourier discrète, une transformée en cosinus discrète, une transformée de Fourier-Mellin discrète, ou une transformée en ondelettes.

On obtient ainsi un ensemble 12 d'éléments dont le format est adapté au chiffrement et à une transmission vers les terminaux récepteurs.

On réalise ensuite une étape 120 de séparation de l'ensemble d'éléments 12 en une première 12A et une seconde 12B parties distinctes d'éléments initiales, de sorte que :

- la première partie initiale 12A comporte des éléments dont une éventuelle variation modifierait perceptiblement ce contenu numérique, et
- la seconde partie initiale 12B comporte uniquement des éléments dont une éventuelle variation modifierait imperceptiblement le contenu numérique.

En variante, l'ensemble d'éléments 12 pourrait être séparé en plus de deux parties, à condition qu'au moins une partie ne comporte que des éléments dont une éventuelle variation modifierait imperceptiblement le contenu numérique.

Par exemple, dans le cas où le contenu numérique est un fichier image, un codage adapté est la transformée en cosinus discret. L'ensemble d'éléments généré par cette transformée peut être séparé en trois parties, comportant respectivement les éléments de haute fréquence, les éléments de moyenne fréquence et les éléments de basse fréquence. Dans ce cas, seule la partie comportant les éléments de haute fréquence comporte des éléments dont une éventuelle variation modifierait imperceptiblement le contenu numérique.

Le procédé prévoit ensuite une étape 130 de chiffrement du contenu numérique, par l'application d'un algorithme de chiffrement paramétré par la clé de chiffrement K.

Cet algorithme de chiffrement est adapté pour que seule la seconde partie initiale 12B soit chiffrée, et cela séparément et indépendamment de la première partie initiale 12A. En effet, l'algorithme de chiffrement consiste à appliquer une fonction de chiffrement à la seconde partie initiale 12B, et à laisser la première partie initiale 12A inchangée.

Dans le cas où l'ensemble d'éléments 12 serait séparé en plus de deux parties, la fonction de chiffrement ne serait appliquée qu'à des parties ne comportant que des éléments dont une éventuelle variation modifierait imperceptiblement le contenu numérique.

On appellera première 14A et seconde 14B parties chiffrées les parties obtenues après application de l'algorithme de chiffrement sur les première 12A et seconde 12B parties initiales. Conformément à l'algorithme de chiffrement défini précédemment, la première partie chiffrée 14A est inchangée par rapport à la première partie initiale 12A.

Ces première 14A et seconde 14B parties chiffrées sont ensuite transmises aux terminaux récepteurs au cours d'une étape 140 de transmission.

Ces première 14A et seconde 14B parties chiffrées peuvent être transmises séparément ou être concaténées en un seul fichier de transmission qui sera à nouveau séparé une fois reçu par un terminal récepteur.

On réalise ensuite, pour chaque terminal récepteur, une étape 150 de déchiffrement des première 14A et seconde 14B parties chiffrées, afin d'obtenir des première 15A et seconde 15B parties déchiffrées.

On applique aux parties chiffrées 14A, 14B un algorithme de déchiffrement paramétré par la clé de déchiffrement spécifique Ki associée à ce terminal récepteur.

Puisque la clé de déchiffrement Ki est conçue pour déchiffrer les parties avec des erreurs propres au terminal récepteur, l'algorithme de déchiffrement est adapté pour que les parties déchiffrées 15A, 15B soient similaire aux parties initiales 12A, 12B à des erreurs de marquage près dépendantes de cette clé de déchiffrement Ki.

On notera que l'algorithme de déchiffrement laisse la première partie chiffrée 14A inchangée, et comporte l'application d'une fonction de déchiffrement, paramétrée par la clé de déchiffrement spécifique Ki, à la seconde partie chiffrée 14B.

Habituellement, la fonction de déchiffrement est l'inverse de la fonction de chiffrement, à quelques différences près correspondant aux différences entre la clé de déchiffrement spécifique Ki et la clé de déchiffrement générique.

Conformément au premier mode de réalisation de l'invention, la fonction de chiffrement est une première fonction de permutation paramétrée par la clé de chiffrement K, et la fonction de déchiffrement est une seconde fonction de permutation paramétrée par la clé de déchiffrement spécifique Ki. Ces première et seconde fonctions de permutations sont sensiblement inverses l'une de l'autre, de façon que les éléments de la seconde partie déchiffrée 15B à l'aide de la seconde fonction de permutation soient similaires aux éléments de la seconde partie initiale 12B à des erreurs de marquage près.

Dans le cas où les algorithmes de chiffrement et de déchiffrement prévoient de laisser la première partie inchangée, seule la seconde partie 15B est susceptible de comporter des erreurs de marquage. Ainsi, les modifications des éléments de la seconde partie étant imperceptibles, la détérioration du contenu numérique par le marquage est limitée.

Plus généralement, les probabilités pour que les première 15A et seconde 15B parties déchiffrées comportent des erreurs de marquage sont inférieures ou égales à des première et seconde valeurs prédéterminées respectives. Ces première et seconde valeurs prédéterminées sont suffisamment basses pour que la qualité perceptible par un utilisateur du contenu numérique ne diminue pas à cause du déchiffrement.

De préférence, la première valeur prédéterminée est nulle ou très basse, afin que les éléments de la première partie ne comportent que très peu ou pas d'erreurs. Conformément au premier mode de réalisation, la première valeur prédéterminée est nulle, puisque l'algorithme de déchiffrement laisse la première partie chiffrée 15A inchangée.

La seconde valeur prédéterminée est habituellement supérieure à la première valeur prédéterminée. En effet, il est nécessaire que la seconde partie 15B comporte des erreurs afin de réaliser le marquage du contenu numérique.

Le procédé comporte enfin une étape 160 de concaténation des première 15A et seconde 15B parties déchiffrées afin d'obtenir un contenu numérique déchiffré 16. Ce contenu numérique déchiffré est similaire au contenu numérique initial 10, à l'exception du fait qu'il comporte des marques imperceptibles.

Ces marques imperceptibles sont dépendantes de la clé de déchiffrement spécifique Ki, et donc associées au terminal récepteur. Ainsi, en analysant les marques d'un contenu numérique 16, il est possible d'identifier le terminal récepteur ayant reçu ce contenu numérique 16.

On décrira dans ce qui suit un deuxième mode de réalisation de l'invention. Ce deuxième mode de réalisation diffère du premier uniquement en ce que les fonctions de chiffrement et de déchiffrement sont différentes.

En effet, conformément au deuxième mode de réalisation de l'invention, la fonction de chiffrement est une première opération « ou exclusif » des éléments de la seconde partie initiale 12B avec une chaîne d'éléments paramétrée par la clé de chiffrement K, et la fonction de déchiffrement est une seconde opération « ou exclusif » des éléments de la seconde partie chiffrée 14B avec une chaîne d'éléments paramétrée par la clé de déchiffrement spécifique Ki.

On rappellera qu'une opération « ou exclusif » consiste à associer un 1 à l'opération de deux bits de valeurs différentes et à associer un 0 à l'opération de deux bits de valeurs identiques.

La seconde opération « ou exclusif » est adaptée pour reconstituer une seconde partie déchiffrée similaire à la seconde partie initiale à des erreurs de marquage près.

Chaque chaîne d'éléments est généralement obtenue à l'aide d'un générateur aléatoire d'éléments de type classique, auquel on applique, en sortie, une fonction de filtrage. Cette fonction de filtrage est choisie de façon à contrôler la probabilité d'obtenir des erreurs de marquage lors la seconde opération « ou exclusif ».

Ainsi, on prévoit que la probabilité pour que la deuxième partie du contenu numérique déchiffré 15B comporte des erreurs de marquage est inférieure ou égale à une valeur prédéterminée suffisamment basse pour que la qualité du contenu numérique déchiffré 16 soit sensiblement identique à la qualité du contenu numérique initial 10.

Des exemples de fonctions de filtrage sont donnés ci-après. Chaque fonction de filtrage dépend d'une clé qui peut être la clé de chiffrement K si la fonction est destinée au chiffrement ou la clé de déchiffrement Ki si la fonction est destinée au déchiffrement.

Dans ces exemples, on notera :

- $x=(x_1;x_2;...;x_d)$ une première suite de d bits ;
- $\alpha = (\alpha_1;\alpha_2;...;\alpha_d)$ une seconde suite de d bits ;
- $F_K$ une fonction de filtrage paramétrée par une clé K ;
- $K(a)$ un bit indexé par $\alpha$ de la clé de déchiffrement K.

Un premier exemple de fonction de filtrage est une fonction $F_K$ définie par :

$$F_K : \{0;1\}^d \rightarrow \{0;1\}$$

$$x \mapsto \sum_{\alpha \in \{0;1\}^d} K(\alpha)x^\alpha$$

où :

$$x^\alpha = \prod_{\substack{i \in \{1;d\} \\ \alpha_i=1}} x_i$$

Dans cet exemple, la fonction destinée au chiffrement ne diffère de la fonction destinée au déchiffrement que de quelques monômes de haut degré, c'est à dire que $Ki(\alpha) \neq K(\alpha)$ pour quelques $\alpha$ dont le poids de Hamming (c'est à dire le nombre de bits valant 1) est proche de d.

Un deuxième exemple de fonction de filtrage est une fonction $F_K$ définie par :

$$F_K : \{0;1\}^d \rightarrow \{0;1\}$$

$$x \mapsto \sum_{j=1}^{d} x_j K(j)p$$

où :

p est une fonction de pondération à valeur dans {0;1}.

On donne ci dessous quatre exemples de fonction p de pondération :

- $p_1 = p_1(n,j)$, n étant une constante prédéterminée, $p_1$ étant telle que $p_1(n,j)=0$ lorsque j divise n, ou $p_1$ (n, j) =1 sinon.

Dans ce cas, la probabilité que p soit nul est donc d'autant plus grande que j est petit, puisque p est nul lorsque j divise n.

Ainsi, afin de réduire la probabilité d'erreur, notamment afin qu'elle soit inférieure à la valeur prédéterminée, il convient de paramétrer la fonction Fk avec une clé K dont les bits de poids fort sont en majorité nuls.

La localisation des erreurs est fonction de la divisibilité de n, et est donc indépendante du paramétrage de la fonction Fk. Ainsi, il y a peu d'erreurs lorsque n a peu de diviseurs, et notamment aucune erreur si n est premier.

- $p_2 = p_2(x,j)$, telle que $p_2(x, j) = 0$ lorsque le nombre de $x_i$, $i \in \{1,...,d\}$, valant 1 est supérieur ou égal à j, ou $p_2(x,j)= 1$ sinon.

Dans ce cas, la probabilité que p soit nul est donc d'autant plus grande que j est petit, puisque p est nul lorsque le nombre de $x_i$, $i \in \{1,...,d\}$, valant 1 est supérieur ou égal à j.

Afin de réduire la probabilité d'erreur, notamment afin qu'elle soit inférieure à la valeur prédéterminée, il convient de paramétrer la fonction Fk avec une clé K dont les bits de poids fort sont en majorité nuls.

Les erreurs sont uniformément réparties dans tout le contenu numérique.

- $p_3 = p_3(n,j)$, n étant une constante prédéterminée, $P_3$ étant telle que $p_3(n,j) = 0$ lorsque $[j \geq d']$ OU $[\lambda$ ne divise pas n+j], ou $P_3(n,j)=1$ sinon, d' et $\lambda$ étant des entiers dépendant de la clé K, d' étant inférieur ou égal à d.

Dans certains cas, les éléments dont une éventuelle variation modifierait perceptiblement ce contenu numérique et les éléments dont une éventuelle variation modifierait imperceptiblement ce contenu numérique se succèdent périodiquement avec une période $\lambda$, par exemple dans le cas du codage impulsion/fréquence échantillonné tel que les formats WAV ou PCM pour le son.

Dans cet exemple, p=1 lorsque $[j<d']$ ET $[\lambda$ divise n+j].

Ainsi, plus d' est grand, plus le nombre de bits de K sera significatif pour différencier le déchiffrement. La probabilité d'apparition des erreurs est donc contrôlée par d' et la position des bits de K valant zéro.

De plus, les indices de x susceptibles d'être modifiés sont ceux qui sont multiples de $\lambda$. La position des erreurs est donc contrôlée par $\lambda$, ainsi que la probabilité d'apparition d'erreurs.

- $p_4 = p_4(n,d,j)$, n étant une constante prédéterminée,

$p_4$ étant telle que $P_4(n,d,j)$=0 lorsque d divise n (n+1)...(n+j-1), ou $P_4(n,d,j)$= 1 sinon.

Dans certains cas, les éléments dont une éventuelle variation modifierait perceptiblement ce contenu numérique sont obtenus pour des n grands, par exemple dans le cas du codage DCT pour des fichiers image.

Dans cet exemple, $p_4$ est nul lorsque d divise le produit n(n+1)...(n+j-1). La probabilité que $p_4$ soit nul est donc d'autant plus grande que n est grand.

Par ailleurs, le produit n(n+1)...(n+j-1) possède d'autant plus de diviseur que j est grand, et donc la probabilité que $p_4$ est donc également d'autant plus grande que j est grand.

La position des bits valant 1 dans K a donc une influence sur la probabilité d'erreur. Les bits de petit indice de K ont une plus grande influence. Ainsi, plus K comporte de bits de petit indice étant nuls, plus la probabilité d'erreur est faible.

La probabilité d'erreur est plus grande dans les premiers éléments du contenu, quand d ne divise pas le produit, ce qui entraîne une localisation des erreurs selon la position globale du bit codant dans le document. En outre, la valeur de d permet de paramétrer cette décroissance de probabilité.

On notera que des fonctions à probabilité d'erreurs contrôlées peuvent également être appliquées conformément à un troisième mode de réalisation de l'invention.

En effet, lorsqu'une fonction p permet de contrôler la position des erreurs (notamment p3 et p4), il n'est plus nécessaire de séparer l'ensemble d'éléments en deux parties d'éléments. L'ensemble d'éléments comporte alors un premier sous-ensemble d'éléments dont une éventuelle variation modifierait perceptiblement ce contenu numérique, et un deuxième sous-ensemble d'éléments dont une éventuelle variation modifierait imperceptiblement ce contenu numérique, les éléments des premier et second sous-ensembles étant répartis dans tout l'ensemble d'éléments.

Le procédé de diffusion conforme au troisième mode de réalisation de l'invention, représenté sur la figure 2, est donc similaire à celui des premier et deuxième modes, à l'exception du fait qu'il ne comporte pas d'étape de séparation ni de concaténation. La fonction de chiffrement est appliquée à un ensemble entier initial d'éléments 12, et la fonction de déchiffrement est appliquées à un ensemble entier chiffré d'éléments 14.

La fonction de déchiffrement est adaptée pour que:

- la probabilité pour que le premier sous-ensemble du contenu numérique déchiffré comporte des erreurs de marquage est inférieure ou égale à la première valeur prédéterminée, et
- le second sous-ensemble du contenu numérique déchiffré comporte des erreurs de marquage.

On notera que l'invention est généralement mise en oeuvre à l'aide d'un dispositif de déchiffrement comportant des moyens de stockage de l'algorithme de déchiffrement et des moyens d'application de cet algorithme de déchiffrement à un contenu numérique chiffré.

On notera que l'invention concerne non seulement un procédé de diffusion d'un contenu numérique vers un ou plusieurs terminaux, comportant une étape de chiffrement, une étape de transmission et une étape de déchiffrement, mais également le procédé de déchiffrement en lui-même comportant l'étape de déchiffrement. Ce procédé de déchiffrement est généralement mis en oeuvre à l'aide d'un dispositif de déchiffrement.

Le dispositif de déchiffrement est par exemple un terminal muni d'un programme d'ordinateur comportant des instructions logicielles pour l'application de l'algorithme de déchiffrement. Un tel programme d'ordinateur peut être téléchargé ou installé à partir d'un support de données lisible par l'ordinateur comportant des moyens de stockage pour le programme d'ordinateur, tel qu'un CD-ROM ou un DVD.

On notera enfin que l'invention n'est pas limitée au mode de réalisation précédemment décrit.

En effet, on pourra imaginer d'autres algorithmes de chiffrement et de déchiffrement adaptés pour que la probabilité pour que le premier sous-ensemble du contenu numérique déchiffré comporte des erreurs de marquage est inférieure ou égale à la première valeur prédéterminée et pour que le second sous-ensemble du contenu numérique déchiffré comporte des erreurs de marquage.

**Revendications**

1. Procédé de diffusion d'un contenu numérique (10) vers au moins un terminal récepteur, comportant :

   - une étape (130) de chiffrement d'un contenu numérique initial (10), par l'application d'un algorithme de chiffrement paramétré par une clé de chiffrement,
   - une étape (140) de transmission du contenu numérique chiffré (14, 14A, 14B) vers le terminal récepteur,
   - une étape (150) de déchiffrement du contenu numérique chiffré (14, 14A, 14B), par l'application d'un algorithme de déchiffrement paramétré par une clé de déchiffrement spécifique, destiné à générer un contenu numérique déchiffré (16),

   l'algorithme de déchiffrement étant adapté pour que le contenu numérique déchiffré (16) soit similaire au contenu numérique initial (10) à des erreurs de marquage près dépendant de la clé de déchiffrement spécifique, **caractérisé en ce que**, le contenu numérique (10) comportant au moins un premier sous-ensemble d'éléments dont une éventuelle variation modifierait perceptiblement ce contenu numérique (10), et un deuxième sous-ensemble d'éléments dont une éventuelle variation modifierait imperceptiblement ce contenu numérique (10), l'algorithme de déchiffrement est adapté pour que :

    - la probabilité pour que le premier sous-ensemble du contenu numérique déchiffré comporte des erreurs de marquage est inférieure ou égale à une première valeur prédéterminée, cette première valeur prédéterminée étant suffisamment basse pour que la qualité du contenu numérique déchiffré soit sensiblement identique à la qualité du contenu numérique initial,

    - le second sous-ensemble du contenu numérique déchiffré comporte des erreurs de marquage.

2. Procédé de diffusion selon la revendication 1, comportant une étape préliminaire (100) de génération de clés de déchiffrement spécifiques, au cours de laquelle chaque clé de déchiffrement spécifique est générée en modifiant une clé de déchiffrement générique, cette clé de déchiffrement générique étant une clé de déchiffrement permettant de paramétrer un algorithme de déchiffrement apte à déchiffrer le contenu numérique chiffré sans générer d'erreurs de marquage.

3. Procédé de diffusion selon la revendication 1 ou 2, dans lequel l'algorithme de déchiffrement est adapté pour que la probabilité pour que le deuxième sous-ensemble du contenu numérique déchiffré comporte des erreurs de marquage est inférieure ou égale à une seconde valeur prédéterminée, supérieure à la première valeur prédéterminée, cette seconde valeur prédéterminée étant suffisamment basse pour que la qualité du contenu numérique déchiffré soit sensiblement identique à la qualité du contenu numérique initial.

4. Procédé de diffusion selon l'une quelconque des revendications 1 à 3, comportant, avant l'étape de chiffrement (130), une étape (110) de codage du contenu numérique initial (10) en un ensemble (12) d'éléments de format adapté à une transmission vers le terminal récepteur, cette étape (110) de codage étant réalisée en appliquant, au contenu numérique initial (10), une transformée telle qu'une transformée de Fourier discrète, une transformée en cosinus discrète, une transformée de Fourier-Mellin discrète, ou une transformée en ondelettes.

5. Procédé de diffusion selon la revendication 4, comportant, avant l'étape de chiffrement (130), une étape (120) de séparation de l'ensemble d'éléments en au moins une première (12A) et une seconde (12B) parties distinctes d'éléments, contenant respectivement les premier et deuxième sous-ensembles d'éléments, les algorithmes de chiffrement et de déchiffrement étant adaptés pour que la deuxième partie (12B) soit chiffrée et déchiffrée séparément et indépendamment de la première partie (12A).

6. Procédé de diffusion selon la revendication 5, dans lequel la première valeur prédéterminée est nulle.

7. Procédé de diffusion selon la revendication 6, dans lequel :

    - les algorithmes de chiffrement et de déchiffrement sont adaptés pour laisser la première partie (12A) inchangée,

    - l'algorithme de chiffrement comporte l'application d'une première fonction de permutation aux éléments de la deuxième partie (12B) uniquement, cette première fonction de permutation étant paramétrée par la clé de chiffrement,

    - l'algorithme de déchiffrement comporte l'application d'une seconde fonction de permutation aux éléments chiffrés de la deuxième partie (14B) uniquement, cette seconde fonction de permutation étant paramétrée par la clé de déchiffrement associée au terminal récepteur,

les première et seconde fonctions de permutation étant sensiblement inverses l'une de l'autre, à quelques différences près dépendant de la clé de déchiffrement, de sorte que la seconde fonction permutation génère, parmi les éléments de la deuxième partie, des erreurs de marquage.

8. Procédé de diffusion selon la revendication 6, dans lequel :

    - les algorithmes de chiffrement et de déchiffrement sont adaptés pour laisser la première partie inchangée,

    - l'algorithme de chiffrement comporte une première opération « ou exclusif » des éléments de la deuxième partie (12B) uniquement avec une chaîne d'éléments paramétrée par la clé de chiffrement,

    - l'algorithme de déchiffrement comporte une seconde opération « ou exclusif » des éléments chiffrés de la deuxième partie (14B) avec une chaîne d'éléments paramétrée par la clé de déchiffrement associée au terminal récepteur,

la seconde opération « ou exclusif » étant adaptée pour reconstituer les éléments de la deuxième partie en générant, parmi ces éléments de la deuxième partie, des erreurs de marquage.

9. Procédé de diffusion selon la revendication 4, dans lequel :

- l'algorithme de chiffrement comporte une première opération « ou exclusif » de l'ensemble d'éléments (12) avec une chaîne d'éléments paramétrée par la clé de chiffrement,

- l'algorithme de déchiffrement comporte une seconde opération « ou exclusif » de l'ensemble des éléments chiffrés (14) avec une chaîne d'éléments paramétrée par la clé de déchiffrement associée au terminal récepteur,

l'opération « ou exclusif inversée » étant adaptée pour reconstituer l'ensemble d'éléments en générant des erreurs de marquage.

10. Procédé de déchiffrement d'un contenu numérique (14, 14A, 14B) ayant été chiffré par l'application d'un algorithme de chiffrement à un contenu numérique initial (10), le procédé de déchiffrement comportant l'application d'un algorithme de déchiffrement paramétré par une clé de déchiffrement spécifique, destiné à générer un contenu numérique déchiffré (16), l'algorithme de déchiffrement étant adapté pour que le contenu numérique déchiffré (16) soit similaire au contenu numérique initial (10) à des erreurs de marquage près dépendant de la clé de déchiffrement spécifique, **caractérisé en ce que**, le contenu numérique (10) comportant au moins un premier sous-ensemble d'éléments dont une éventuelle variation modifierait perceptiblement ce contenu numérique (10), et un deuxième sous-ensemble d'éléments dont une éventuelle variation modifierait imperceptiblement ce contenu numérique (10), l'algorithme de déchiffrement est adapté pour que :

- la probabilité pour que le premier sous-ensemble du contenu numérique déchiffré comporte des erreurs de marquage est inférieure ou égale à une première valeur prédéterminée, cette première valeur prédéterminée étant suffisamment basse pour que la qualité du contenu numérique déchiffré soit sensiblement identique à la qualité du contenu numérique initial,
- le second sous-ensemble du contenu numérique déchiffré comporte des erreurs de marquage.

11. Dispositif de déchiffrement d'un contenu numérique (14, 14A, 14B) ayant été chiffré par l'application d'un algorithme de chiffrement à un contenu numérique initial (10), **caractérisé en ce qu'**il comporte :

- des moyens de stockage d'un algorithme de déchiffrement paramétré par une clé de déchiffrement spécifique, adapté pour générer un contenu numérique déchiffré (16) de façon que le contenu numérique déchiffré (16) soit similaire au contenu numérique initial (10) à des erreurs de marquage près dépendant de la clé de déchiffrement spécifique, l'algorithme de déchiffrement étant adapté pour que, le contenu numérique (10) comportant au moins un premier sous-ensemble d'éléments dont une éventuelle variation modifierait perceptiblement ce contenu numérique (10), et un deuxième sous-ensemble d'éléments dont une éventuelle variation modifierait imperceptiblement ce contenu numérique (10) :

• la probabilité pour que le premier sous-ensemble du contenu numérique déchiffré comporte des erreurs de marquage est inférieure ou égale à une première valeur prédéterminée, cette première valeur prédéterminée étant suffisamment basse pour que la qualité du contenu numérique déchiffré soit sensiblement identique à la qualité du contenu numérique initial,
• le second sous-ensemble du contenu numérique déchiffré comporte des erreurs de marquage.

- des moyens d'application de l'algorithme de déchiffrement au contenu numérique chiffré.

12. Programme d'ordinateur pour le déchiffrement d'un contenu numérique (14, 14A, 14B) ayant été chiffré par l'application d'un algorithme de chiffrement à un contenu numérique initial (10), le programme comportant des instructions logicielles pour l'application d'un algorithme de déchiffrement paramétré par une clé de déchiffrement spécifique, destiné à générer un contenu numérique déchiffré (16), l'algorithme de déchiffrement étant adapté pour que le contenu numérique déchiffré (16) soit similaire au contenu numérique initial (10) à des erreurs de marquage près dépendant de la clé de déchiffrement spécifique, **caractérisé en ce que**, le contenu numérique (10) comportant au moins un premier sous-ensemble d'éléments dont une éventuelle variation modifierait perceptiblement ce contenu numérique (10), et un deuxième sous-ensemble d'éléments dont une éventuelle variation modifierait imperceptiblement ce contenu numérique (10), l'algorithme de déchiffrement est adapté pour que :

- la probabilité pour que le premier sous-ensemble du contenu numérique déchiffré comporte des erreurs de marquage est inférieure ou égale à une première valeur prédéterminée, cette première valeur prédéterminée étant suffisamment basse pour que la qualité du contenu numérique déchiffré soit sensiblement identique à la qualité du contenu numérique initial,
- le second sous-ensemble du contenu numérique déchiffré comporte des erreurs de marquage.

**13.** Support de données lisible par un ordinateur, **caractérisé en ce qu'**il comporte des moyens de stockage pour un programme d'ordinateur selon la revendication 12.

-130-
12A ──────▶ 14A        -150-
                   14A ──────▶ 15A
-110-      -120-                              -160-
10 ──────▶ 12 ──────▶        -140-                    ──────▶ 16
                                     14B ──────▶ 15B
12B ──────▶ 14B    14B

Fig. 1

K

Ki

-110-      -130-      -140-      -150-
10 ──────▶ 12 ──────▶ 14 ──────▶ 14 ──────▶ 16

K              Ki        Fig. 2

**EP 1 845 702 A1**

**Office européen
des brevets**

**RAPPORT DE RECHERCHE EUROPEENNE**

Numéro de la demande

EP 07 10 6049

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 2 853 099 A (FRANCE TELECOM [FR]) 1 octobre 2004 (2004-10-01) * page 6, ligne 2 - page 11, ligne 18 * ----- | 1,10-13 | INV. H04N1/44 H04L9/00 |
| A | US 2004/098603 A1 (CORINNE LE BUHAN [CH]) 20 mai 2004 (2004-05-20) * abrégé * ----- | 1,10-13 | |
| A | WO 2006/014040 A (UTE ELECTRONICS AND TELECOMM R [KR]; YOO WON YOUNG [KR]; LEE SEON HWA) 9 février 2006 (2006-02-09) ----- | | |
| A | US 2004/199771 A1 (MORTEN GLENN A [US] ET AL) 7 octobre 2004 (2004-10-07) ----- | | |
| A | US 2004/078575 A1 (MORTEN GLENN A [US] ET AL) 22 avril 2004 (2004-04-22) ----- | | |
| A | FR 2 856 539 A (FRANCE TELECOM [FR]) 24 décembre 2004 (2004-12-24) ----- | | DOMAINES TECHNIQUES RECHERCHES (IPC) |
| A | WO 99/41900 A (FRAUNHOFER GES FORSCHUNG [DE]) 19 août 1999 (1999-08-19) ----- | | H04N H04L |

Le présent rapport a été établi pour toutes les revendications

| Lieu de la recherche | Date d'achèvement de la recherche | Examinateur |
|---|---|---|
| La Haye | 3 juillet 2007 | Hazel, James |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 10 6049

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-07-2007

| Document brevet cité au rapport de recherche | | Date de publication | Membre(s) de la famille de brevet(s) | | Date de publication |
|---|---|---|---|---|---|
| FR 2853099 | A | 01-10-2004 | EP | 1606932 A2 | 21-12-2005 |
|  |  |  | WO | 2004086284 A2 | 07-10-2004 |
| US 2004098603 | A1 | 20-05-2004 | AUCUN | | |
| WO 2006014040 | A | 09-02-2006 | KR | 20060013099 A | 09-02-2006 |
| US 2004199771 | A1 | 07-10-2004 | AUCUN | | |
| US 2004078575 | A1 | 22-04-2004 | AUCUN | | |
| FR 2856539 | A | 24-12-2004 | CN | 1836396 A | 20-09-2006 |
|  |  |  | EP | 1634405 A2 | 15-03-2006 |
|  |  |  | WO | 2005008951 A2 | 27-01-2005 |
|  |  |  | JP | 2006527944 T | 07-12-2006 |
|  |  |  | US | 2006153377 A1 | 13-07-2006 |
| WO 9941900 | A | 19-08-1999 | AT | 301370 T | 15-08-2005 |
|  |  |  | CA | 2319340 A1 | 19-08-1999 |
|  |  |  | DE | 69926483 D1 | 08-09-2005 |
|  |  |  | DE | 69926483 T2 | 01-06-2006 |
|  |  |  | EP | 1055321 A1 | 29-11-2000 |
|  |  |  | JP | 2002503838 T | 05-02-2002 |
|  |  |  | US | 6141753 A | 31-10-2000 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2853099 A